# EUROPÄISCHE PATENTSCHRIFT

(11) **EP 1 432 570 B1**
(45) Veröffentlichungstag und Bekanntmachung des Hinweises auf die Patenterteilung: **19.12.2007**
(21) Anmeldenummer: 02758035.6
(22) Anmeldetag: 19.09.2002
(51) Int. Cl.: B32B 17/10, C03C 27/12, E06B 3/677

(54) **VERFAHREN UND VORRICHTUNG ZUM BEFÜLLEN EINES HOHLRAUMES ZWISCHEN ZWEI GLASSCHEIBEN EINES BRANDSCHUTZVERBUNDGLASES**
METHOD AND DEVICE FOR FILLING A CAVITY BETWEEN TWO SHEETS OF FIRE-RESISTING COMPOSITE GLASS
PROCEDE ET DISPOSITIF DE REMPLISSAGE D'UNE CAVITE FORMEE ENTRE DEUX VITRES D'UN VITRAGE COMPOSE COUPE-FEU

(30) Priorität: 04.10.2001 CH 18312001
(43) Veröffentlichungstag der Anmeldung: 30.06.2004
(73) Patentinhaber: Vetrotech Saint-Gobain (International) AG, 3000 Bern 22 (CH)
(72) Erfinder: LINDBERG, Anders, S-36131 Emmaboda (SE); LINDQVIST, Jan-Olof, S-36131 Emmaboda (SE)
(74) Vertreter: Bruderer, Werner
(86) Internationale Anmeldenummer: PCT/CH2002/000515
(87) Internationale Veröffentlichungsnummer: WO 2003/031173

(56) Entgegenhaltungen:
- DE-A- 2 555 383
- DE-A- 10 006 199

## Beschreibung

Die Erfindung betrifft ein Verfahren zum Befüllen eines Hohlraumes zwischen zwei Glasscheiben eines Brandschutz- und/oder Isollerverbundglases, wobei eine der Glasscheiben entlang des Randbereiches der Innenfläche und mit Abstand zu den Kantenflächen mit einem umlaufenden Strang von plastischem Abstandhaltermaterial belegt wird, dann die zweite Glasscheibe mit der ersten zusammengebracht und an den Strang aus Abstandhaltermaterial angelegt wird, die beiden Scheiben in eine Plattenpresse eingebracht und der Aufbau aus Scheiben und Abstandhaltermaterial-Strang unter Bildung einer Randnute auf eine bestimmte Dicke zusammengepresst wird, der Hohlraum durch Öffnungen im Strang mit einem Füllmaterial gefüllt und nach dem Füllen diese Öffnungen verschlossen werden, sowie eine Vorrichtung mit Mitteln zum Ausführen dieses Verfahrens.

Brandschutzverbundgläser dieser Art sind aus EP 0 590 978 B1 bekannt. Bei diesen bekannten Brandschutzverbundgläsem ist zwischen zwei mit Abstand zueinander angeordneten Glasscheiben eine wasserhaltige Zwischenschicht angeordnet. Der Abstand zwischen den beiden Glasscheiben ist durch Abstandhalter bestimmt, wobei dieser Abstandhalter aus einem Profilstrang aus einem starren Material, nämlich Metall oder Keramik besteht Die Verbindung zwischen den Glasscheiben und dem Abstandhalter wird durch einen Kleber auf der Basis von Butylkautschuk hergestellt. Auf der gegen die Kanten der Glasscheiben gerichteten Seite des Abstandhalters ist eine Randnute vorhanden, welche mit einem zusätzlichen Dichtungsmaterial aus synthetischem Kautschuk ausgefüllt und abgedichtet ist. Die Herstellung von Brandschutzverbundgläsem dieser Art ist mit verschiedenen Problemen behaftet. Insbesondere bei grossflächigen Scheiben bzw. Gläsern ist es schwierig, Abstandhalter aus starrem Material so zu formen und einzubringen, dass eine einwandfreie und dichte Verbindung zwischen den Glasscheiben und dem starren Abstandhalter entsteht. Das Erstellen und Einbringen der Abstandhalter in der richtigen Form ist aufwendig und bedarf zumeist Handarbeit. Die Öffnungen für das Einfüllen der wasserhaltigen Zwischenschicht müssen zuvor angebracht werden und deren Verschliessen nach dem Füllen des Hohlraumes zwischen den beiden Glasscheiben, ist ebenfalls schwierig und aufwendig.

Aus DE 25 55 383 A1 ist es für Isolierverbundgläser bekannt, den festen Abstandhalter durch einen Strang aus Abstandhaltermaterial, beispielsweise einer Mischung von Polyisobutylen und Butylkautschuk, zu ersetzen. Dieser Strang aus Abstandhattermaterial wird mittels einer Strangpresse direkt auf eine der Glasscheiben aufextrudiert und anschliessend wird die zweite Glasscheibe mit der ersten zusammengebracht und die beiden Scheiben in einer Plattenpresse auf die gewünschte Dicke zusammengepresst Das Füllen des Hohlraumes zwischen den beiden Glasscheiben mit einem Füllmaterial, beispielsweise einem Schutzgas, ist hier nicht beschrieben. Es ist jedoch an sich bekannt, dazu den Strang aus Abstandhaltermaterial mit einem Rohr zu durchstossen und durch ein oder mehrere derartige Rohre das Schutzgas einzufüllen. Anschliessend werden die Rohre entfernt und die Öffnungen im Strang aus Abstandhaltermaterial wieder geschlossen und zusätzlich in die aussenliegende Randnute eine äussere Schicht bzw. ein Strang aus Dichtungsmaterial in der Form von Polysulfid aufgebracht. Das hier beschriebene Verfahren und die zugehörige Vorrichtung ermöglicht wohl ein automatisches Aufbringen des Stranges aus Abstandhaltermaterial, aber nicht das gleichzeitige bzw. direkt anschliessende Aufbringen des Stranges aus Dichtungsmaterial. Dies hat zur Folge, dass die Glasscheiben bzw. Verbundgläser sehr vorsichtig gehandhabt werden müssen, da die Verbindung der Glasscheiben über den elastischen Strang aus Abstandhaltermaterial nicht genügend stabil ist. Es besteht auch die Gefahr, dass Fremdkörper in die Randnute gelangen und am Abstandhalter haften bleiben. Beim Anbringen der Öffnungen zum Befüllen des Hohlraumes zwischen den Glasscheiben können ebenfalls Bruchstücke des Abstandhaltermateriales oder andere Fremdkörper in den Hohlraum gelangen, was zu Qualitätsminderungen des Verbundglases oder sogar zu Ausschussware von Verbundgläsern führen kann.

Es ist deshalb Aufgabe der vorliegenden Erfindung, zum Erstellen, Befüllen und nachfolgenden Verschliessen des Hohlraumes zwischen zwei Glasscheiben ein Verfahren und eine Vorrichtung zur Ausführung dieses Verfahrens zu schaffen, mit welchem sowohl der Strang aus Abstandhaltermaterial wie auch der Strang aus Dichtungsmaterial automatisch und vollständig, umlaufend aufgebracht werden können, dabei der aussenliegende Strang aus Dichtungsmaterial direkt nach dem Verpressen der Glasscheiben auf die gewünschte Dicke und vor dem Füllen des Hohlraumes anbringbar sein soll, beim Erstellen und Verschliessen der Einfüllöffnungen keine Fremdkörper in den Hohlraum zwischen den Glasscheiben gelangen sollen und beim Verschliessen der Einfüllöffnungen ein Entlüften des Hohlraumes ermöglicht sein soll.

Diese Aufgabe wird bei einem Verfahren nach dem Oberbegriff des Patentanspruches 1 erfindungsgemäss durch die kennzeichnenden Merkmale dieses Patentanspruches und bei einer Vorrichtung nach dem Oberbegriff des Patentanspruches 6 nach den kennzeichnenden Merkmalen dieses Patentanspruches 6 gelöst. Vorteilhafte Weiterbildungen der Erfindung ergeben sich nach den Merkmalen der abhängigen Patentansprüche.

Mit dem erfindungsgemässen Verfahren werden verschiedene Vorteile erzielt. Dadurch, dass vor dem Zusammenbringen der Glasscheiben an mindestens einer Stelle des Stranges und quer über den Strang aus Abstandhaltermaterial ein Kernelement eingelegt wird, sind bereits vor dem Zusammenbringen der beiden Glasscheiben die Mittel zum Erstellen der Einfüllöffnungen vorhanden. Dabei kann es sich um Brandschutz- oder Isolierverbundgläser handeln und das Verbundglas kann aus zwei Glasscheiben mit dazwischen liegendem Hohlraum oder aus mehreren Glasscheiben mit mehreren dazwischen liegenden Hohlräumen bestehen. Nach dem Verpressen des Scheibenaufbaues auf die gewünschte Dikke kann in die Randnute zwischen dem Abstandhaltermaterial und den Kantenflächen der Glasscheiben der zusätzliche Strang aus Dichtungsmaterial eingebracht werden, wobei dies automatisch erfolgen kann. Dies bringt den Vorteil, dass der Scheibenaufbau, bzw. das entsprechende Verbundglas, bereits vor dem Befüllen des Hohlraumes vollständig formstabil ist und keine Nuten vorhanden sind, in welchen sich Fremdkörper ansammeln können. Die Verbundgläser können normal gehandhabt und transportiert werden und auch zu anderen Bearbeitungsstationen, z.B. eine Befüllstation, gebracht werden. Zudem besteht der Vorteil, dass die Mittel zum Erstellen ein Einfüllöffnung zum Befüllen des Hohlraumes in der Form der Kernelemente bereits vorhanden sind und deshalb der Strang aus Abstandhaltermaterial nicht mehr zugänglich sein muss. Zum Erstellen der Öffnungen zum Befüllen des Hohlraumes zwischen zwei Glasscheiben wird das oder die Kernelemente aus dem Strang und dem Scheibenaufbau nach aussen herausgezogen und entfernt. Durch das Herausziehen des Kernelementes wird der Strang aus Abstandhaltermaterial beidseits des Kernelementes durchtrennt und teilweise nach aussen gezogen und der zweite äussere Strang aus Dichtungsmaterial durchbrochen. Dabei wird mittels des Kernelementes alles Material, welches von den beiden Strängen losgelöst wird, nach aussen gebracht und es kann kein Restmaterial In den Hohlraum zwischen zwei Glasscheiben gelangen. Das Befüllen eines Hohlraumes zwischen je zwei Glasscheiben kann in bekannter Weise durch die erzeugte Öffnung erfolgen. Dabei wird bei einem Brandschutzverbundglas beispielsweise eine Masse aus transparentem wasserhaltigem Alkalipolysylikat, wie sie beispielsweise aus EP 0 620 781 B1 bekannt ist, eingefüllt oder bei einem Isolierverbundglas ein bekanntes Schutzgas eingebracht Nach dem vollständigen Befüllen des Hohlraumes zwischen je zwei Glasscheiben werden mittels eines Mitnehmerstopfens die beidseits der Öffnungen teilweise nach aussen gezogenen Bereiche des Stranges aus Abstandhaltermaterial wieder nach innen gedrückt und die Öffnungen in diesem Strang werden verschlossen. Eine verbesserte Lösung besteht darin, dass der Mitnehmerstopfen zusätzlich mit plastischem Material beschichtet wird. Dieses plastische Material kann expandiert werden und wirkt mit den Randbereichen des Stranges aus Abstandhaltermaterial zusammen.

Dadurch wird die Sicherheit der Abdichtung erhöht. Auf diese Weise kann die Randnute im Bereiche der Einfüllöffnungen wieder erzeugt und durch Einbringen von zusätzlichem Dichtungsmaterial auch der ausgebrochene Bereich des zweiten äusseren Stranges aus Dichtungsmaterial wieder vervollständigt werden. Gleichzeitig ergibt sich der Vorteil, dass der ursprüngliche Aufbau von Abstandhaltermaterial-Strang und aussen liegendem Dichtungsmaterial-Strang im Wesentlichen wieder erstellt wird und der Mitnehmerstopfen, welcher die Einfüllöffnung verschliesst, vollständig mit Dichtungsmaterial überdeckt wird.

Der Verfahrensschritt, dass beim Einlegen des Kernelementes in den Strang aus Abstandhaltermaterial und beim anschliessenden Zusammenpressen der Glasscheiben nur ein Teil des Querschnittes des Stranges aus dem Abstandhalter material verdrängt wird, bringt den Vorteil, dass zusätzliches Abstandhaltermaterial vorhanden bleibt, welches nach dem Herausziehen der Kernelemente und dem Erstellen der Einfüllöffnungen vorhanden bleibt, um anschliessend die Öffnungen wieder möglichst vollständig mit Abstandhaltermaterial verschliessen zu können. Ein weiterer Vorteil besteht darin, dass beim Herausziehen der Kernelemente im Bereich der entstehenden Öffnungen das aussen liegende Dichtungsmaterial teilweise ausgebrochen wird und dadurch die Kernelemente manuell oder mit automatischen Hilfsmitteln besser gefasst und herausgezogen werden können. Vorteilhaft ist auch, dass der Hohlraum zwischen den Glasscheiben während des Eindrückens des Mitnehmerstopfens in die Öffnung im Strang aus Abstandhaltermaterial über Zusatzöffnungen entlüftet wird. Dadurch wird sichergestellt, dass das Abstandhaltermaterial, welches beispielsweise bei einem Brandschutzverbundglas gegen das wasserhaltige Mittel im Hohlraum zwischen den Glasscheiben gedrückt wird, vollständig mit diesem in Kontakt gebracht werden kann und überschüssige Luft oder eventuell auch überschüssiges Füllmittel über diese Zusatzöffnungen verdrängt werden kann. Diese Zusatzöffnungen können nach dem Eindrücken des Mitnehmerstopfens in den Strang aus Mitnehmermaterial in einfacher Weise beim Vervollständigen des zweiten äusseren Stranges aus Dichtungsmaterial verschlossen und abgedichtet werden. Auch dieser Vorgang kann in einfacher Weise ausgeführt und mindestens teilweise automatisiert werden.

Das erfindungsgemässe Verfahren ermöglicht insbesondere bei der Herstellung von Brandschutzverbundgläsem, aber auch bei Isolierverbundgläsern ein automatisches Produktionsverfahren, wobei für das Aufbringen der Abstandhaltermaterialien sowie der Dichtungsmaterialien an sich bekannte Roboter einsetzbar sind. Dadurch, dass das Dichtungsmaterial direkt nach dem Verpressen des Scheibenaufbaues bzw. der Verglasung auf die gewünschte Dicke entlang des gesamten Umfanges einstückig aufgebracht werden kann, ergibt sich ein optimaler Schutz des Abstandhaltermaterial-Stranges und des Hohlraumes zwischen zwei Glasscheiben. Diese Verbundgläser bilden Halbzeuge und können problemlos zwischengelagert und bei Bedarf den nächsten Bearbeitungsschritten zugeführt werden. Der ganze Herstellungsprozess für Verbundgläser dieser Art wird vereinfacht und kann durch die zusätzlich möglichen Automatisierungsschritte kostengünstiger ausgeführt werden.

Die erfindungsgemässe Vorrichtung zur Ausführung des erfindungsgemässen Verfahrens besteht aus mehreren Mitteln. Ein erstes Mittel bildet ein Kernelement mit einem Formteil zum mindestens teilweisen Durchtrennen des Abstandhaltermaterial-Stranges. Im Weiteren ist das Kemelement mit mindestens einem Mitnehmerteil zum Erzeugen einer Öffnung im Strang aus Abstandhaltermaterial zwischen den Scheiben ausgestattet. Ein zweites Mittel weist Dicht- und Mitnahmeelemente zum Verschliessen des Abstandhaltermaterial-Stranges und eine Entlüftungseinrichtung auf. Das dritte Mittel dient zum Einbringen des zweiten Mittels bzw. des Mitnehmerstopfens in den Abstandhaltermaterial-Strang zwischen zwei Glasscheiben. Dieses dritte Mittel bildet ein Hilfsmittel für die Handhabung des zweiten Mittels. Diese Aufteilung der Vorrichtung in mehrere Mittel macht es möglich, die einzelnen Mittel genau auf die notwendigen Funktionen auszurichten und an diese anzupassen. Dadurch können die Funktionen optimal erfüllt werden und die einzelnen Teilmittel der Vorrichtung lassen sich einfacher gestalten und ausbilden. Das erste Mittel, welches als Kernelement ausgebildet ist, wird in vorteilhafter Weise so gestaltet, dass es ein inneres und ein äusseres Kopfteil umfasst, wobei zwischen diesen Kopfteilen ein Formteil als Steg angeordnet ist. Die Höhe der Kopfteile ist dabei maximal so gross wie der Abstand zwischen den Glasscheiben und die Höhe des Steges ist kleiner, als die Höhe der Kopfteile. Diese Gestaltung macht es möglich, dass ein Kernelement, welches vor dem Zusammenbringen der Glasscheiben quer Ober den Strang aus Abstandhaltermaterial eingelegt wird, den Strang im Bereiche des Steges nur teilweise verdrängt. Die Anordnung einer Nase am äusseren Kopfteil des ersten Mittels bzw. des Kernelementes ermöglicht das Fassen und Herausziehen des Kernelementes aus dem Strang mittels eines Hilfswerkzeuges. Die am inneren Kopfteil des ersten Mittels, bzw. des Kernelementes angebrachten Mitnehmer sind gegen den Strang aus Abstandhaltermaterial gerichtet und greifen beim Herausziehen des Kernelementes aus dem Verbundglas in den Strang aus Abstandhaltermaterial ein. Dies bringt den Vorteil, dass beim Herausziehen der Strang im Bereich der gewünschten Einfüllöffnung aufgerissen und durchtrennt wird und die beiden Endbereiche des Stranges mindestens teilweise trichterförmig nach aussen gezogen werden. Die Mitnehmer bilden somit Öffnungsmittel für den Strang aus Abstandhaltermaterial zwischen je zwei Glasscheiben.

Das zweite Mittel, welches einen Mitnehmerstopfen bildet, weist Mitnehmerschultern auf, welche in den Abstandhaltermaterial-Strang eingreifen sowie eine durchgehende Bohrung, welche sich von der gegen den Hohlraum gerichteten Seite gegen den Kantenbereich des Verbundglases erstreckt. Mittels der Mitnehmerschultern können die Endbereiche des Abstandhaltermaterial-Stranges beidseits der Einfüllöffnung erfasst und beim Eindrücken des Mitnehmerstopfens bzw. des zweiten Mittels zwischen zwei Glasscheiben nach innen und wieder gegeneinander gedrückt werden. Die durchgehende Bohrung ermöglicht das Entweichen von Luft oder eventuell auch von überschüssigem Füllmaterial aus dem Hohlraum zwischen den Glasscheiben. Das an dem vom Hohlraum zwischen den Scheiben abgewendeten Ende des zweiten Mittels angeordnete Rohrstück dient als Verbindungsmittel zum dritten Mittel und weist gleichzeitig eine Sollbruchstelle auf. Diese Sollbruchstelle dient dazu, dass ein allfällig überlanges Teil des Rohrstückes nach dem vollständigen Eindrücken in den Abstandhaltermaterial-Strang abgebrochen und aus der Randnute entfernt werden kann. Dies hat den Vorteil, dass kein Teilstück des zweiten Mittels Ober die Kantenbereiche der Glasscheiben vorsteht. Das zweite Mittel bzw. der Mitnehmerstopfen ist Ober den Umfang eines Teilbereiches mit einem plastischen Material beschichtet. Dabei handelt es sich um das gleiche Material wie es für den Abstandhalterstrang verwendet wird, z.B. Butylkautschuk oder ein anderes bekanntes und geeignetes Material. Dieses plastische Material unterstützt und verbessert die Dichtungswirkung des Mitnehmerstopfens. Mittels einer Anpressplatte, welche von aussen nach innen verschiebbar ist, wird das plastische Material quer zur Einschubrichtung expandiert.

Das dritte Mittel ist lösbar mit dem zweiten Mittel verbindbar und zwar über das Rohrstück. Es bildet ein Halteelement für das zweite Mittel bzw. den Mitnehmerstopfen, mit welchem dieser Mitnehmerstopfen in den Zwischenraum zwischen zwei Glasscheiben und damit in die Öffnung im Strang aus Abstandhaltermaterial eingebracht und eingedrückt werden kann. Auch in diesem dritten Mittel ist eine Entlüftungsbohrung angeordnet, welche mit der Bohrung im zweiten Mittel zusammenwirkt. Das zweite Mittel bzw. der Mitnehmerstopfen wird nach dem Befüllen des Hohlraumes zwischen je zwei Glasscheiben in die Öffnungen im Strang aus Abstandhaltermaterial eingebracht bzw. in diesen eingedrückt und verschliesst diese Öffnungen. Dabei wirkt der Mitnehmerstopfen über die Mitnehmer schulter mit dem Strang zusammen und bildet mit dem Abstandhaltermaterial eine formschlüssige Einheit. Die Entlüftungseinrichtung im zweiten Mittel bzw. in dem Mitnehmerstopfen wird durch das aussen liegende Dichtmittel verschlossen.

In vorteilhafter Weise wird zwischen dem Strang aus Abstandhaltermaterial und den Kantenflächen der Glasscheiben beim Aufbringen des Stranges und anschliessenden Verpressen der Glasscheiben zu einem Verbundglas eine umlaufende Nut ausgebildet und diese Nut mit Dichtmaterial ausgefüllt Als besonders geeignetes Dichtungsmaterial erweisen sich Materialien aus der Gruppe der Elastomere, beispielsweise Polysulfidelastomere.

Im Folgenden wird die Erfindung anhand von Ausführungsbeispielen unter Bezugnahme auf die beiliegenden Zeichnungen näher erläutert. Es zeigen:
- Fig. 1: den Randbereich eines Brandschutzverbundglases im Schnitt,
- Fig. 2: einen Eckbereich einer ersten Scheibe mit Abstandhaltermaterial-Strang und Kernelement,
- Fig. 3: einen Schnitt durch einen Eckbereich eines Brandschutzverbundglases mit herausgezogenem Kernelement,
- Fig. 4: einen Schnitt durch einen Eckbereich eines Brandschutzverbundglases nach dem Füllen des Hohlraumes mit zweitem und drittem Mittel der Vorrichtung,
- Fig. 5: den gleichen Schnitt wie in Fig. 4 nach dem Verschieben der Anpressplatte,
- Fig. 6: einen Schnitt durch einen Eckbereich eines Brandschutzverbundglases nach dem Füllen und Verschliessen der Füllöffnung,
- Fig. 7: eine Ansicht eines ersten Mittels bzw. Eckelementes,
- Fig. 8: einen Schnitt durch das Eckelement gemäss Fig. 6, und
- Fig. 9: ein zweites und ein drittes Mittel der Vorrichtung im Teilschnitt.

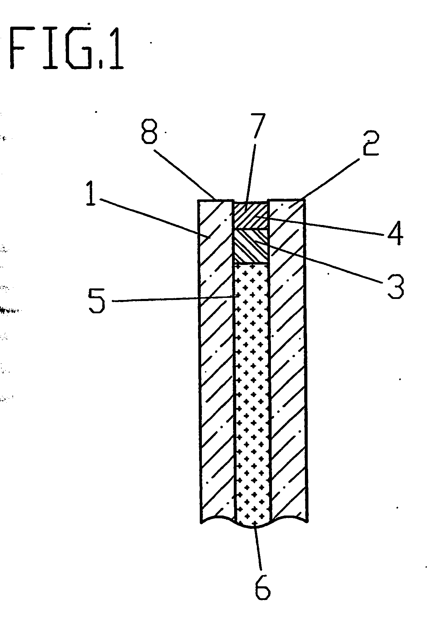

In Fig. 1 ist ein Querschnitt durch den Randbereich eines Brandschutzverbundglases dargestellt Das dargestellte Brandschutzverbundglas umfasst zwei thermisch vorgespannte Floatglasscheiben 1, 2 von jeweils 5 mm Dicke. Diese beiden Glasscheiben 1, 2 sind mit Abstand zueinander angeordnet, wobei der Abstand durch einen Strang 3 aus Abstandhaltermaterial bestimmt ist Zwischen den beiden Glasscheiben 1, 2 ist in bekannter Weise ein Hohlraum 5 ausgebildet und mit einer Brandschutzmasse 6 gefüllt. Bei dieser Brandschutzmasse 6 kann es sich beispielsweise um eine ausgehärtete transparente wasserhaltige Alkalipolysilikatmasse handeln, wie sie in EP 0 620 781 B1 beschrieben ist oder eine andere bekannte Masse. Diese Polysilikatmasse 6 wird nach dem Einfüllen in den Hohlraum 5 zwischen den beiden Glasscheiben 1, 2 ausgehärtet. Der Abstandhaltermaterial-Strang 3 besteht aus einem aufextrudierten Strang eines Butylpolymers, wie er beispielsweise in DE 199 22 507 A1 beschrieben ist Eine Einrichtung zum Aufbringen eines derartigen Abstandhaltermaterial-Stranges 3 auf eine der Glasscheiben 1, 2 ist beispielsweise in DE 25 55 383 A1 beschrieben. Zwischen dem Abstandhaltermaterial-Strang 3 und den Kantenflächen 8 der beiden Glasscheiben 1,2 ist eine Randnute 7 ausgebildet, welche mit einem Dichtungsmaterial-Strang 4 ausgefüllt ist. Geeignete Materialien für diesen Dichtungsmaterial-Strang 4 können der Gruppe der Elastomere entnommen werden, wobei sich ein Polysulfidelastomer als besonders geeignet erweist. Die beiden Stränge 3, 4 sind umlaufend um das ganze Verbundglas ausgebildet und umschliessen den Hohlraum 5 bzw. die Brandschutzmasse 6 vollständig. Das Brandschutzverbundglas kann in bekannter Weise auch mehr als zwei Scheiben und mehrere Hohlräume mit entsprechenden Randdichtungen aufweisen. Der in Fig. 1 dargestellte Aufbau von zwei Glasscheiben zu einem Brandschutzverbundglas erfolgt in der Weise, dass vorerst auf eine der beiden Glasscheiben 1, 2 beispielsweise die Innenseite der Glasscheibe 1 mit Hilfe einer kalibrierten Extrusionsdüse einer Extrusionsvorrichtung ein etwa 6 mm dicker Strang eines Butylpolymers vollständig umlaufend aufextrudiert wird. Anschliessend wird die Glasscheibe 2 aufgelegt und das Scheibenpaket aus den beiden Glasscheiben 1 und 2 und dem dazwischen liegenden Abstandhaltermaterial-Strang 3 in eine Plattenpresse eingebracht und in an sich bekannter Weise auf den Sollabstand zusammengepresst. Im vorliegenden Beispiel wird das gesamte Paket auf eine Gesamtdicke von 16 mm zusammengepresst. Anschliessend wird mit einer entsprechenden Extrusionsdüse der Dichtungsmaterial-Strang 4 in die Randnute 7 eingebracht, so dass der gesamte Randbereich abgedichtet und die beiden Glasscheiben 1 und 2 im Randbereich formstabil miteinander verbunden und verklebt sind. In diesem Zustand ist der Hohlraum 5 noch nicht mit Brandschutzmasse 6 gefüllt und diese muss nun noch eingefüllt werden.

Um die Brandschutzmasse 6 in den Hohlraum 5 zwischen den beiden Glasscheiben 1, 2 einfüllen zu können, müssen mindestens eine Einfüllöffnung und eine Entlüftungsöffnung vorhanden sein. In zweckmässiger Weise ist eine Öffnung an einer Ecke des Brandschutzverbundglases vorgesehen, welche sowohl Einfüllwie Entlüftungsöffnung bildet. Es können aber auch je eine Öffnung jeweils an gegenüberliegenden Ecken des Brandschutzverbundglases vorgesehen sein. Gemäss der Erfindung werden entsprechende Mittel zum Erzeugen dieser Öffnungen bereits während dem Herstellvorgang des Aufbaues des Verbundes der beiden Scheiben 1, 2 eingebaut. Der Verfahrensvorgang zum Erstellen der Einfüll- und Entlüftungsöffnungen sowie des anschliessenden Verschliessens dieser Öffnungen ist in den Fig. 2 bis 6 entsprechend den Verfahrensschritten dargestellt. Fig. 2 zeigt eine Aufsicht auf einen Ausschnitt aus einem Eckbereich der Glasscheibe 1, auf welche der Abstandhaltermaterial-Strang 3 bereits aufgebracht wurde. In der dargestellten Ecke sowie in der gegenübediegenden Ecke der Glasscheibe 1 wird nun ein erstes Mittel bzw. ein Kernelement 9 quer Ober den Abstandhaltermaterial-Strang 3 eingelegt, wobei dieses Kemelement 9 nicht über die Kantenfläche 8 der Glasscheibe 1 vorsteht Die Dicke des Kernelementes 9 ist maximal so gross wie der Sollabstand zwischen den beiden Glasscheiben 1 und 2 im verpressten Zustand. Das Kemelement 9 weist Kopfteile 13 und 14 auf, welche auf der Innenfläche der Glasscheibe 1 aufliegen. Zwischen den beiden Kopfteilen 13, 14 ist ein Formteil 12 ausgebildet, welches weniger dick ist als die beiden Kopfteile 13,14. Dieses Formteil 12 wird in den Abstandhaltermaterial-Strang 3 eingedrückt und verdrängt in diesem Bereich das Butylpolymer. Mindestens am äusseren Kopfteil 14 ist eine Nase 15 angeordnet Diese Nase 15 dient dazu, um mit einem Hilfswerkzeug das Kemelement 9 erfassen und aus der Brandschutzverglasung herausziehen zu können. Mindestens am inneren Kopfteil 13 sind Mitnehmer 16 angeordnet, welche gegen den Abstandhaltermaterial-Strang 3 gerichtet sind und Schneidkanten bilden. Im dargestellten Beispiel des Kernelementes 9 sind die beiden Kopfteile 13 und 14 symmetrisch ausgebildet, d.h. sie weisen beide sowohl eine Nase 15 wie auch Mitnehmer 16 auf. Dies hat den Vorteil, dass das Kernelement 9 auch in einer 180° gewendeten Position eingebaut werden kann.

Sobald in dem bestimmten Eckbereich der Glasscheibe 1 ein Kemelement 9 in den Abstandhaltermaterial-Strang eingelegt und eingedrückt ist, kann die zweite Glasscheibe 2 aufgelegt werden und der Scheibenverbund wird nun, wie bereits beschrieben, in einer Plattenpresse auf die gewünschte Solldicke zusammengepresst. Das Kernelement 9 befindet sich nun an einem Eckbereich des Brandschutzverbundglases zwischen den beiden Glasscheiben 1, 2, ohne dass es über die Kantenflächen 8 vorsteht. Das Aufbringen des Dichtungsmaterial-Stranges 4 in die Randnute 7 kann nun automatisch erfolgen, da keine vorstehenden Teile vorhanden sind und ein allfälliger Extrusionsroboter um den vollen Umfang von 360° um das Brandschutzverbundglas herumfahren kann. Bei einem Verbund aus mehr als zwei Scheiben werden diese Vorgänge mehrmals durchgeführt, bis die gewünschte Anzahl Hohlräume gebildet ist.

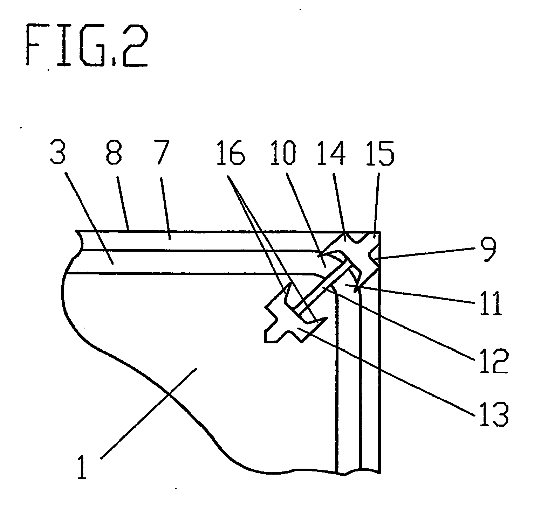

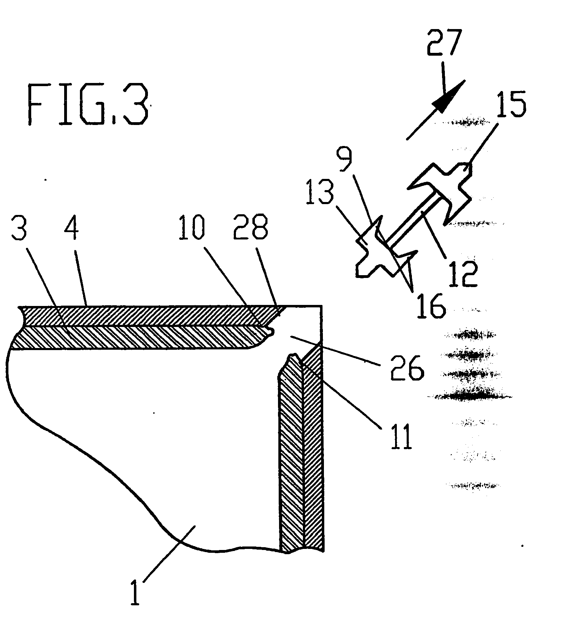

In Fig. 3 ist der Eckbereich des Brandschutzverbundglases nach dem Erzeugen der Einfüll- bzw. Entlüftungsöffnung 26 dargestellt. Diese Öffnung 26 wird dadurch erzeugt, dass das Kernelement 9 in Richtung des Pfeiles 27 aus dem Brandschutzverbundglas herausgezogen wird. Dazu wird ein an sich bekanntes Hilfswerkzeug verwendet, mittels welchem das Kernelement 9 an der Nase 15 erfasst und herausgezogen wird. Beim Herausziehen des Kernelementes 9 greifen die Mitnehmer 16 am inneren Kopfteil 13 in den Abstandhaltermaterial-Strang 3 ein, durchtrennen diesen und ziehen Teile davon nach aussen. Im Bereich, in welchem das Formteil 12 in den Strang 3 eingedrückt wurde, reisst der Strang 3 auf und es bilden sich die beiden nach aussen gerichteten Endbereiche 10, 11 des Abstandhaltermaterial-Stranges 3. Gleichzeitig wird während des Herausziehens des Kernelementes 9 der Dichtungsmaterial-Strang 4 aufgerissen und mindestens im Bereich 28 der Öffnung 26 ausgebrochen. Dadurch entsteht nach dem vollständigen Herausziehen des Kernelementes 9 die trichterförmige Öffnung 26. Auf gleiche Weise kann an einer der anderen Ecken des Brandschutzverbundglases, in vorteilhafter Weise an der gegenüberliegenden, eine zweite Öffnung erzeugt werden. Ober diese beiden Öffnungen 26 kann beispielsweise von einer unteren Öffnung her die Brandschutzmasse 6 in den Hohlraum 5 eingefüllt werden, wobei die Luft durch die obere Öffnung entweichen kann. Es wird Brandschutzmasse 6 eingefüllt bis der Hohlraum 5 vollständig gefüllt ist Sobald der Hohlraum 5 vollständig mit Brandschutzmasse 6 gefüllt ist, werden die einzige oder beide Öffnungen wieder verschlossen. Wenn nur eine Öffnung 26 erzeugt wurde, wird die Brandschutzmasse 6 durch diese Öffnung 26 eingefüllt und gleichzeitig wird über diese gleiche Öffnung 26 entlüftet.

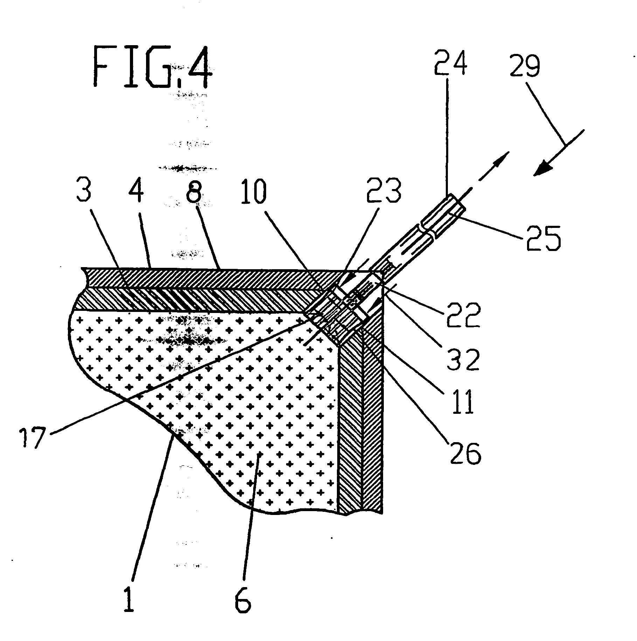

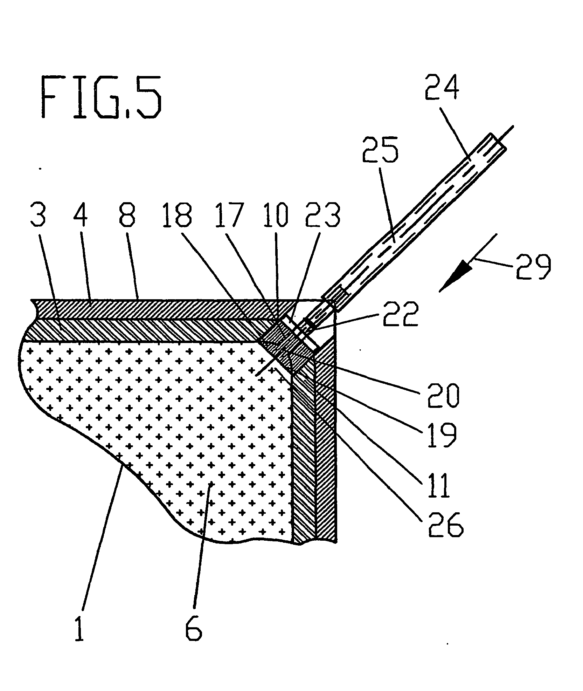

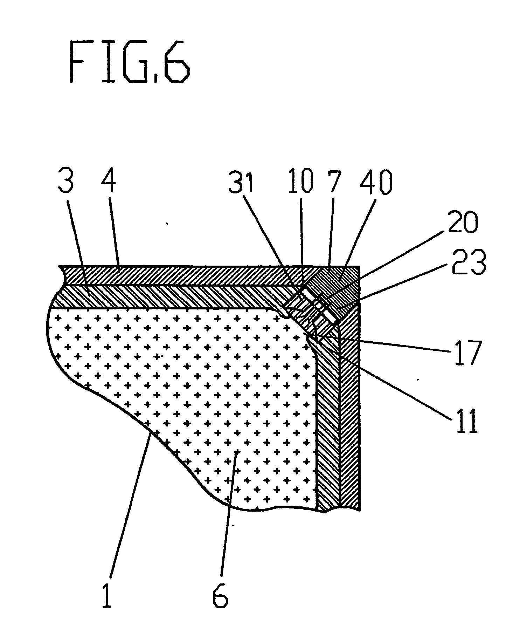

Der Verschliessvorgang der Öffnung 26 nach dem Einfüllen der Brandschutzmasse 6 in den Hohlraum 5 ist in Fig. 4 dargestellt. Zum Verschliessen der Öffnung 26 wird ein zweites Mittel in der Form eines Mitnehmerstopfens 17 verwendet. Dieser Mitnehmerstopfen 17 wirkt mit einem dritten Mittel 24 zusammen, welches als Hilfeselement zum Handhaben und Einbringen des Mitnehmerstopfens 17 bzw. des zweiten Mittels dient. Der Mitnehmerstopfen 17 bzw. das zweite Mittel und das dritte Handhabungs-Mittel 24 sind in Fig. 9 genau dargestellt. Der Mitnehmerstopfen 17 weist am vorderen Ende zwei Mitnehmerschultern 18, 19 auf, welche in die Endbereiche 10, 11 des Abstandhaltermaterial-Stranges 3 eingreifen, wenn der Mitnehmerstopfen 17 mittels des dritten Mittels 24 in Richtung des Pfeiles 29 von aussen in die Öffnung 26 gestossen wird. An dem nach aussen gerichteten Bereich des Mitnehmerstopfens 17 ist ein Rohrstück 22 angeordnet, auf welchem eine Anpressplatte 23 gleitend geführt ist. Durch den ganzen Mitnehmerstopfen 17 erstreckt sich eine Bohrung 20, welche als Entlüftungseinrichtung dient. Auch im dritten Mittel 24 ist eine Entlüftungsbohrung 25 vorgesehen, so dass beim Verschliessen der Öffnung 26 allfällige, noch vorhandene Luft oder auch überschüssiges Füllmaterial aus dem Hohlraum 4 nach aussen entweichen kann. Zum Verschliessen der Öffnung 26 wird der Mitnehmerstopfen 17 mit Hilfe des dritten Mittels 24 in Richtung des Pfeiles 29 gestossen, wobei sich die beiden Endbereiche 10 und 11 des Abstandhaltermaterial-Stranges 3 an den Mitnehmerstopfen 17 anlegen und der Strang 3 wieder dicht geschlossen wird. Am Mitnehmerstopfen 17 ist ein Bereich 30 ausgebildet, welcher sich zwischen den Mitnehmerschultern 18, 19 und einer Anpressplatte 23 befindet Dieser Bereich 30 ist mit plastischem Material 31 beschichtet Im beschriebenen Beispiel wird als plastisches Material Butylkautschuk eingesetzt. Es können auch andere Materialien verwendet werden, welche mit dem Material des Stranges 3 eine dichtende Verbindung eingehen. Wenn sich der Mitnehmerstopfen 17 in der in Fig. 4 dargestellten Position befindet, wird die Anpressplatte 23 in Richtung der Pfeile 32 nach innen geschoben und damit das Material 31 zusammengepresst und quer zur Einschubrichtung 29 expandiert. Dadurch wird eine formschlüssige Verbindung zwischen den beiden Endbereichen 10, 11 des Stranges 3 geschaffen. Da das Material 31 radial in alle Richtungen expandiert, wird auch im Kontaktbereich zu den Glasflächen der Scheiben 1, 2 wieder eine dichte Haftverbindung geschaffen. In Fig. 5 ist der Mitnehmerstopfen 17 mit zusammengepresstem Material 31, d.h. mit eingeschobener Anpressplatte 23 dargestellt. Am Rohrstück 22 des Mitnehmerstopfens 17 ist eine Sollbruchstelle 21 angeordnet, welche sich bei vollständig eingestossenem Mitnehmerstopfen 17 innerhalb der Kantenflächen 8 der Scheiben 1, 2, bzw. der Randnute 7 befindet Das Rohrstück 22 wird an dieser Sollbruchstelle 21 mittels des dritten Mittels 24 abgebrochen, so dass keine über die Kantenfläche 8 vorstehende Teile mehr vorhanden sind. Fig. 6 zeigt den Eckbereich nach dem Abbrechen des Rohrstückes 22 an der Sollbruchstelle 21 und nach dem Entfernen des dritten Mittels 24. Anschliessend wird derjenige Bereich der Randnute 7, aus welcher das Dichtungsmaterial 4 ausgebrochen wurde, wieder mit Dichtungsmaterial 40 aufgefüllt und die Dichtungsanordnung im Randbereich wieder vervollständigt. Dieser Endzustand ist in Fig. 6 dargestellt. Hier ist ersichtlich, dass mittels des Mitnehmerstopfens 17 bzw. des zweiten Mittels der Vorrichtung die beiden Endbereiche 10, 11 des Abstandhaltermaterial-Stranges wieder nach innen gerichtet sind. Durch die nach innen geschobene Anpressplatte 23 wird das Abstandhaltermaterial zusätzlich nach innen gestossen und das plastische Material 31 radial expandiert, wodurch der Mitnehmerstopfen 17 vollständig in den Abstandhaltermaterial-Strang 3 eingeschlossen wird. Die vollständige Abdichtung erfolgt nun durch das zusätzlich eingebrachte Dichtungsmaterial 40, welches den Mitnehmerstopfen 17 vollständig einschliesst und nach aussen abdichtet. Damit wird auch die Bohrung 20 im Mitnehmerstopfen 17 verschlossen und abgedichtet.

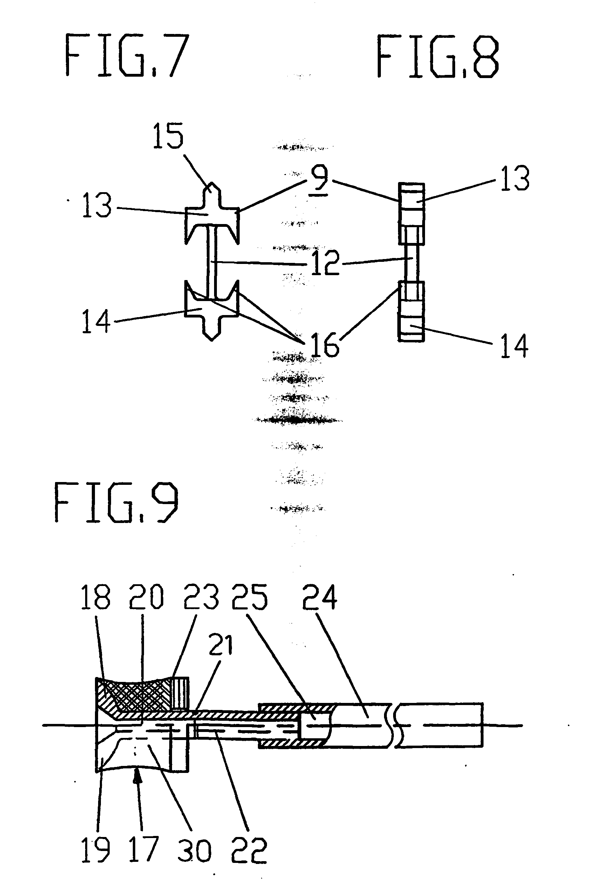

Fig. 7 zeigt eine Aufsicht auf ein Kernelement 9 und Fig. 8 einen Querschnitt entlang der Längsachse. Das Kernelement 9 besteht aus den beiden Kopfteilen 13, 14, welche über das Formteil 12 miteinander verbunden und symmetrisch ausgebildet sind. Beide Kopfteile 13,14 weisen Nasen 15 und Mitnehmer 16 auf. Insbesondere aus Fig. 7 ist ersichtlich, dass das Formteil 12 weniger dick ist, als die beiden Kopfteile 13, 14. Die beiden Kopfteile 13,14 sind symmetrisch ausgebildet, um die Handhabung bzw. Orientierung beim Einbau zu erleichtern.

Fig. 9 zeigt einen Teilschnitt durch den Mitnehmerstopfen 17 und das lösbar, mit dem Mitnehmerstopfen 17 verbundene dritte Mittel 24. Der Mitnehmerstopfen bzw. das zweite Mittel 17, weist am vorderen Ende die beiden Mitnehmerschultern 18, 19 und am hinteren Ende das Rohrstück 22 auf. Durch den ganzen Mitnehmerstopfen 17 erstreckt sich eine durchgehende Bohrung 20. Am Rohrstück 22 ist eine Sollbruchstelle 21 angeordnet, welche zum Abtrennen des hinteren Bereiches des Rohrstückes 22 dient. Die Anpressplatte 23 ist verschiebbar auf dem Rohrstück 22 geführt und auf dieses aufgeschoben. Im Bereich 30 ist plastisches Material 31, z.B. Butylkautschuk angeordnet. Der Mitnehmerstopfen 17 vermag seine Abdichtfunktion jedoch auch zu erfüllen, wenn kein plastisches Material 31 vorhanden ist. Das dritte Mittel 24, welches ein Hilfselement darstellt, besteht im vorliegenden Falle aus einem Rohrstück, welches mit einem Haftsitz auf den hintersten Bereich des Rohrstückes 22 des Mitnehmerstopfens 17 aufgesteckt ist. Auf diese Weise lässt sich der relativ kleine Mitnehmerstopfen 17 besser handhaben und zwar auch mit automatischen Montageeinrichtungen, z.B. einem Roboter. Allfälliges Füllmaterial, welches beim Einbau des Mitnehmerstopfens 17 in die Öffnung 26 aus dem Hohlraum 5 zwischen den beiden Glasscheiben 1, 2 durch die Bohrung 20 austritt, wird über die Entlüftungsbohrung 25 im dritten Mittel 24 nach aussen geführt und die Randnute 7 wird in keiner Weise von allfällig austretendem Material verschmutzt. Dies hat den Vorteil, dass der ganze Bereich, welcher mit zusätzlichem Dichtungsmaterial 40 abgedichtet wird, vollständig sauber bleibt und eine einwandfreie Haftung des Dichtungsmaterials 40 an der Oberfläche der beiden Glasscheiben 1, 2 im Bereich der Randnute 7 gewährleistet ist. Wenn der Mitnehmerstopfen 17 und die Anpressplatte 23, wie oben beschrieben, vollständig in den Randbereich der Randnute 7 eingeschoben sind, befindet sich die Anpressplatte 23 vor der Sollbruchstelle 21. Das hintere Ende des Rohrstückes 22 wird in dieser Position mittels des dritten Mittels 24 abgebrochen und aus der Randnute 7 entfernt.

## Patentansprüche

1. Verfahren zum Befüllen eines Hohlraumes (5) zwischen zwei Glasscheiben (1, 2) eines Brandschutz- und/oder Isolierverbundglases, wobei eine der Glasscheiben (1) entlang des Randbereiches der Innenfläche und mit Abstand zu den Kantenflächen (8) mit einem umlaufenden Strang (3) von plastischem Abstandhaltermaterial belegt wird, dann die zweite Glasscheibe (2) mit der ersten zusammengebracht und an den Strang (3) aus Abstandhaltermaterial angelegt wird, die beiden Scheiben (1, 2) in eine Plattenpresse eingebracht und der Aufbau aus Scheiben (1, 2) und Abstandhaltermaterial-Strang (3) unter Bildung einer Randnute (7) auf eine bestimmte Dicke zusammengepresst wird, der Hohlraum (5) durch Öffnungen (26) im Strang (3) mit einem Füllmaterial (6) gefüllt und nach dem Füllen diese Öffnungen (26) verschlossen werden, **dadurch gekennzeichnet, dass** vor dem Zusammenbringen der Glasscheiben (1, 2) an mindestens einer Stelle des Stranges (3) aus Abstandhaltermaterial und quer über den Strang (3) ein Kemelement (9) eingelegt wird, nach dem Verpressen des Scheibenaufbaues auf die gewünschte Dicke zwischen dem Strang (3) aus Abstandhaltermaterial und den Kantenflächen (8) der Glasscheiben (1, 2) ein zweiter umlaufender Strang (4) aus Dichtmaterial in die Randnute (7) zwischen den Glasscheiben (1, 2) eingebracht wird und das oder die Kernelemente (9) mindestens teilweise überdeckt werden, dann das oder die Kernelemente (9) aus dem Strang (3) und dem Scheibenaufbau herausgezogen und entfernt werden, durch das Herausziehen der Kernelemente (9) der Strang (3) aus Abstandhaltermaterial beidseits des Kernelementes (9) durchtrennt und teilweise nach aussen gezogen, sowie der zweite äussere Strang (4) aus Dichtungsmaterial durchbrochen und eine trichterförmige Öffnung (26) gebildet wird, nach dem Füllen des Hohlraumes (5) die beidseits der Öffnungen (26) nach aussen gezogenen Bereiche (10, 11) des Stranges (3) aus Abstandhaltermaterial mittels eines Mitnehmerstopfens (17) wieder nach innen gedrückt und die Öffnung (26) in diesem Strang (3) verschlossen wird und der ausgebrochene Bereich des zweiten äusseren Stranges (4) aus Dichtungsmaterial wieder mit Dichtungsmaterial (40) vervollständigt und der Mitnehmerstopfen (17) vollständig mit Dichtungsmaterial (4, 40) überdeckt wird.

2. Verfahren zum Befüllen eines Hohlraumes (5) zwischen zwei Glasscheiben (1,2) einer Brandschutz- und/oder Isolierverglasung nach Patentanspruch 1, **dadurch gekennzeichnet, dass** das Kernelement (9) beim Einlegen in den Strang (3) aus Abstandhaltermaterial und beim anschliessenden Zusammenpressen der Glasscheiben (1,2) nur einen Teil des Querschnitts des Stranges (3) aus Abstandhaltermaterial verdrängt.

3. Verfahren zum Befüllen eines Hohlraumes (5) zwischen zwei Glasscheiben (1, 2) einer Brandschutz- und/oder Isolierverglasung nach Patentanspruch 1 oder 2, **dadurch gekennzeichnet, dass** durch das Herausziehen des Kernelementes (9) im Bereich der entstehenden Öffnung (26) das aussen liegende Dichtungsmaterial (4) teilweise ausgebrochen wird.

4. Verfahren zum Befüllen eines Hohlraumes (5) zwischen zwei Glasscheiben (1, 2) einer Brandschutz- und/oder Isolierverglasung nach einem der Patentansprüche 1 bis 3, **dadurch gekennzeichnet; dass** der Mitnehmerstopfen (17) im einen Bereich (30) zwischen den Mitnehmerschultern (18, 19) und der Anpressplatte (23) mit plastischem Material (31) beschichtet wird und nach dem Einschieben des Mitnehmerstopfens (17) in die Öffnung (26) im Strang (3) dieses plastische Material (31) quer zur Einschubrichtung (29) expandiert wird und die Öffnung (26) durch Zusammenwirken mit den Bereichen (10, 11) des Stranges (3) verschlossen wird.

5. Verfahren zum Befüllen eines Hohlraumes (5) zwischen zwei Glasscheiben (1, 2) einer Brandschutz-und/oder Isolierverglasung nach einem der Patentansprüche 1 bis 4, **dadurch gekennzeichnet, dass** der Hohlraum (5) zwischen den Glasscheiben (1, 2) während des Eindrückens der Mitnehmerstopfen (17) in die Öffnungen (26) im Strang (3) aus Abstandhaltermaterial über Zusatzöffnungen (20) entlüftet wird und diese Zusatzöffnungen (20) mit dem Vervollständigen des zweiten äusseren Stranges (4) aus Dichtungsmaterial (40) verschlossen werden.

6. Vorrichtung zur Ausführung des Verfahrens gemäss Anspruch 1, zum Befüllen von Hohlräumen (5) bei Brandschutz- und/oder Isolierverglasungen, wobei mindestens zwei Glasscheiben (1, 2) mit Abstand zueinander angeordnet sind und den Hohlraum (5) begrenzen, zwischen den Glasscheiben (1, 2) entlang der Randbereiche ein umlaufender Strang (3) aus elastischem Abstandhaltermaterial angeordnet ist und ein Mittel zum Einfüllen von Füllmaterial in den Hohlraum zwischen den Glasscheiben vorhanden ist, **dadurch gekennzeichnet, dass** sie enthält: erste Mittel (9) mit einem Formteil (12) zum mindestens teilweisen Durchtrennen des Abstandhaltermaterial-Stranges (3) und mit mindestens einem Kopfteil zum Erzeugen einer Öffnung (26) im Strang (3) zwischen den Scheiben (1, 2), wobei dieses erste Mittel (9) ein Kernelement bildet, zweite Mittel (17) mit einer Entlüftungseinrichtung (20) und mit Dicht- und Mitnahmeelementen (18, 19) zum Verschliessen der Öffnung (26) und dritte Mittel (24) zum Einbringen des zweiten Mittels (17) in die Öffnung (26) im Strang (3).

7. Vorrichtung zum Befüllen von Hohlräumen (5) bei Brandschutz-und/oder Isolierverglasungen nach Patentanspruch 6, **dadurch gekennzeichnet, dass** das erste Mittel (9), welches als Kernelement ausgebildet ist, ein inneres und ein äusseres Kopfteil (13,14) umfasst, wobei zwischen diesen Kopfteilen (13, 14) das Formteil (12) als Steg angeordnet ist, die Höhe der Kopfteile (13, 14) maximal so gross ist wie der Abstand zwischen den Glasscheiben (1, 2) und die Höhe des Steges (12) kleiner ist als die Höhe der Kopfteile (13, 14).

8. Vorrichtung zum Befüllen von Hohlräumen (5) bei Brandschutz-und/oder Isolierverglasungen nach Patentanspruch 6 oder 7, **dadurch gekennzeichnet, dass** das äussere Kopfteil (14) des ersten Mittels beziehungsweise des Kernelementes (9) eine Nase (15) aufweist, welche ein Greifelement für ein Hilfswerkzeug zum Herausziehen des Kernelementes (9) aus dem Strang (3) bildet.

9. Vorrichtung zum Befüllen von Hohlräumen (5) bei Brandschutz- und/oder Isolierverglasungen nach einem der Patentansprüche 6 bis 8, **dadurch gekennzeichnet, dass** am inneren Kopfteil (13) des ersten Mittels beziehungsweise des Kernelementes (9) Mitnehmer (16) angeordnet und gegen den Strang (3) gerichtet sind und diese Mitnehmer (16) beim Herausziehen in den Strang (3) eingreifen und Öffnungsmittel für den Strang (3) bilden.

10. Vorrichtung zum Befüllen von Hohlräumen (5) bei Brandschutz- und/oder Isolierverglasungen nach einem der Patentansprüche 6 bis 9, **dadurch gekennzeichnet, dass** das zweite Mittel (17) Mitnehmerschultern (18, 19), welche in den Abstandhaltermaterial-Strang (3) eingreifen und eine durchgehende Bohrung (20) aufweist, an dem vom Hohlraum (5) zwischen den Scheiben (1, 2) abgewendeten Ende ein Rohrstück (22) angeordnet ist, welches an diese Bohrung (20) anschliesst und an diesem Rohrstück (22) eine Sollbruchstelle (21) angeordnet ist.

11. Vorrichtung zum Befüllen von Hohlräumen (5) bei Brandschutz- und/oder Isolierverglasungen nach einem der Patentansprüche 6 bis 10, **dadurch gekennzeichnet, dass** das dritte Mittel (24) lösbar mit dem zweiten Mittel (17) verbindbar ist und ein Halteelement für das zweit Mittel (17) bildet, wobei im dritten Mittel (24) eine Entlüftungsbohrung (25) angeordnet ist, welche mit der Bohrung (20) im zweiten Mittel (17) zusammenwirkt.

12. Vorrichtung zum Befüllen von Hohlräumen (5) bei Brandschutz- und/oder Isolierverglasungen nach einem der Patentansprüche 6 bis 11, **dadurch gekennzeichnet, dass** das zweite Mittel (17) in einem Bereich (30) zwischen den Mitnehmerschultern (18, 19) und einer Anpressplatte (23) mit plastischem Material (31) beschichtet ist und die Anpressplatte (23) in Richtung der Mitnehmerschultern (18,19) verschiebbar ist.

13. Vorrichtung zum Befüllen von Hohlräumen (5) bei Brandschutz- und/oder Isolierverglasungen nach einem der Patentansprüche 6 bis 12, **dadurch gekennzeichnet, dass** zwischen dem Strang (3) aus Abstandhaltermaterial und den Kantenflächen (8) der Glasscheiben (1, 2) eine umlaufende Randnute (7) ausgebildet und diese Randnute (7) mit einem Dichtmittel (4) ausgefüllt ist.

14. Vorrichtung zum Befüllen von Hohlräumen (5) bei Brandschutz- und/oder Isolierverglasungen nach Patentanspruch 11, **dadurch gekennzeichnet, dass** das Dichtungsmaterial (4) ein Material aus der Gruppe der Elastomere ist.

15. Vorrichtung zum Befüllen von Hohlräumen (5) bei Brandschutz- und/oder Isolierverglasungen nach einem der Patentansprüche 6 bis 13, **dadurch gekennzeichnet, dass** das zweite Mittel (17) nach dem Befallen des Hohlraumes (5) die Öffnungen (26) im Strang (3) aus Abstandhaltermaterial verschliesst und mit diesem zusammenwirkt und die Entlüftungseinrichtung (20) durch Dichtungsmaterial (40) verschlossen ist.

## Claims

1. A method of filling a cavity (5) between two glass panes (1, 2) of a fire-retardant and/or insulating composite glass, in which one of the glass panes (1) is fitted, along the marginal region of the inner face and spaced from the edge faces (8), with a peripheral cord (3) of plastic spacer material, then the second glass pane (2) is brought up to the first and laid against the cord (3) of spacer material, the two panes (1, 2) are put into a platen press and the construction comprising the panes (1, 2) and the spacer material cord (3) is compressed to a particular thickness to form a marginal groove (7), the cavity (5) is filled with a filling material (6) through openings (26) in the cord (3), and after the filling these openings (26) are closed off, **characterised in that** before the glass panes (1, 2) are brought up to one another a core element (9) is inserted at at least one point on the cord (3) of spacer material, transversely across the cord (3), after compression of the pane construction to the desired thickness between the cord (3) of spacer material and the edge faces (8) of the glass panes (1, 2) a second peripheral cord (4) of sealing material is inserted into the marginal groove (7) between the glass panes (1, 2) and the core element(s) (9) is/are at least partly covered, then the core element(s) (9) is/are withdrawn from the cord (3) and the pane construction and removed, and by withdrawing the core elements (9) the cord (3) of spacer material is severed on either side of the core element (9) and is drawn partly outwards and the second, outer cord (4) of sealing material is broken and a funnel-shaped opening (26) is formed, and after the cavity (5) has been filled the regions (10, 11) of the cord (3) of spacer material which have been drawn outwards on either side of the openings (26) are pressed inwards again by means of an entraining plug (17) and the opening (26) in this cord (3) is closed off and the broken region of the second, outer cord (4) of sealing material is made complete again with sealing material (40) and the entraining plug (17) is completely covered with sealing material (4, 40).

2. A method of filling a cavity (5) between two glass panes (1, 2) of a fire-retardant and/or insulating glazing according to Claim 1, **characterised in that** when the core element (9) is inserted into the cord (3) of spacer material and when the glass panes (1, 2) are subsequently pressed together the core element (9) displaces only part of the cross-section of the cord (3) of spacer material.

3. A method of filling a cavity (5) between two glass panes (1, 2) of a fire-retardant and/or insulating glazing according to Claim 1 or 2, **characterised in that** withdrawing the core element (9) in the region of the opening (26) that is produced has the effect of partly breaking through the sealing material (4) on the outside.

4. A method of filling a cavity (5) between two glass panes (1, 2) of a fire-retardant and/or insulating glazing according to one of Claims 1 to 3, **characterised in that** the entraining plug (17) is coated in the one region (30), between the entraining shoulders (18, 19) and the contact pressure plate (23), with plastic material (31) and after the entraining plug (17) has been pushed into the opening (26) in the cord (3) this plastic material (31) is expanded transversely with respect to the direction (29) of pushing in and the opening (26) is closed off by cooperation with the regions (10, 11) of the cord (3).

5. A method of filling a cavity (5) between two glass panes (1, 2) of a fire-retardant and/or insulating glazing according to one of Claims 1 to 4, **characterised in that** air is removed from the cavity (5) between the glass panes (1, 2), while the entraining plug (17) is being pressed into the openings (26) in the cord (3) of spacer material, via additional openings (20) and these additional openings (20) are closed off when the second, outer cord (4) of sealing material (40) is made complete.

6. A device for performing the method according to Claim 1, for filling cavities (5) in fire-retardant and/or insulating glazing, in which at least two glass panes (1, 2) are arranged spaced from one another and delimit the cavity (5), a peripheral cord (3) of elastic spacer material is arranged between the glass panes (1, 2) along the marginal regions, and a means of inserting filling material into the cavity is provided between the glass panes, **characterised in that** it contains: first means (9) having a moulded part (12) for at least partly severing the spacer material cord (3) and having at least one head part for creating an opening (26) in the cord (3) between the panes (1, 2), this first means (9) forming a core element; second means (17) having an air removal device (20) and having sealing and entraining elements (18, 19) for closing off the opening (26) ; and third means (24) for introducing the second means (17) into the opening (26) in the cord (3).

7. A device for filling cavities (5) in fire-retardant and/or insulating glazing according to Claim 6, **characterised in that** the first means (9), which is in the form of a core element, comprises an inner and an outer head part (13, 14), with the moulded part (12) being arranged as a web between these two head parts (13, 14), the size of the head parts (13, 14) is at most as large as the spacing between the glass panes (1, 2) and the size of the web (12) is smaller than the size of the head parts (13, 14).

8. A device for filling cavities (5) in fire-retardant and/or insulating glazing according to Claim 6 or 7, **characterised in that** the outer head part (14) of the first means or core element (9) has a lug (15) which forms a gripping element for an auxiliary tool for withdrawing the core element (9) from the cord (3).

9. A device for filling cavities (5) in fire-retardant and/or insulating glazing according to one of Claims 6 to 8, **characterised in that** entrainers (16) are arranged on the inner head part (13) of the first means or core element (9) and point towards the cord (3) and these entrainers (16) engage in the cord (3) during withdrawal and form means of opening the cord (3).

10. A device for filling cavities (5) in fire-retardant and/or insulating glazing according to one of Claims 6 to 9, **characterised in that** the second means (17) has entraining shoulders (18, 19), which engage in the spacer material cord (3), and a continuous bored hole (20), and at the end remote from the cavity (5) between the panes (1, 2) there is arranged a tubular piece (22) which adjoins this bored hole (20), and a predetermined break point (21) is arranged on this tubular piece (22).

11. A device for filling cavities (5) in fire-retardant and/or insulating glazing according to one of Claims 6 to 10, **characterised in that** the third means (24) is detachably connectable to the second means (17) and forms a holding element for the second means (17), with a bored hole (25) for air removal being provided in the third means (24) and cooperating with the bored hole (20) in the second means (17) .

12. A device for filling cavities (5) in fire-retardant and/or insulating glazing according to one of Claims 6 to 11, **characterised in that** the second means (17) is coated, in a region (30) between the entraining shoulders (18, 19) and a contact pressure plate (23), with plastic material (31) and the contact pressure plate (23) may be displaced in the direction of the entraining shoulders (18, 19).

13. A device for filling cavities (5) in fire-retardant and/or insulating glazing according to one of Claims 6 to 12, **characterised in that** a peripheral marginal groove (7) is formed between the cord (3) of spacer material and the edge faces (8) of the glass panes (1, 2) and this marginal groove (7) is filled with a sealing material (4).

14. A device for filling cavities (5) in fire-retardant and/or insulating glazing according to Claim 11, **characterised in that** the sealing material (4) is a material from the group comprising elastomers.

15. A device for filling cavities (5) in fire-retardant and/or insulating glazing according to one of Claims 6 to 13, **characterised in that** after the cavity (5) has been filled the second means (17) closes off the openings (26) in the cord (3) of spacer material and cooperates therewith and the air removal device (20) is closed off by sealing material (40).

## Revendications

1. Procédé de remplissage d'un espace creux (5) entre deux vitres (1,2) d'un vitrage ignifugé et/ou isolant, dans lequel une des vitres (1) est garnie, le long de la zone du bord de la surface interne et à distance des surfaces de chant (8), d'un boudin périphérique (3) de matériau d'espacement synthétique, la seconde vitre (2) est ensuite assemblée à la première et appliquée sur le boudin (3) en matériau d'espacement, les deux vitres (1,2) sont introduites dans une presse à plateau et la structure formée des vitres (1,2) et du boudin en matériau d'espacement (3) est pressée en ménageant une certaine épaisseur pour former une rainure de bord (7), l'espace creux (5) est rempli d'un matériau de remplissage (6) via des ouvertures (26) ménagées dans le boudin (3) et, après remplissage, ces ouvertures (26) sont obturées, **caractérisé en ce que**, avant l'assemblage des vitres (1,2), on insère, en au moins un endroit du boudin (3) en matériau d'espacement et transversalement sur le boudin (3) un élément de noyau (9), après compression de la structure de vitres à l'épaisseur souhaitée entre le boudin (3) en matériau d'espacement et les surfaces de chant (8) des vitres (1,2), un second boudin périphérique (4) en matériau étanche est inséré dans la rainure du bord (7) entre les vitres (1,2), et le ou les éléments de noyau (9) est ou sont recouverts au moins en partie, puis le ou les éléments de noyau (9) sont dégagés du boudin (3) et de la structure de vitres et retirés, le boudin (3) en matériau d'espacement, est, du fait du retrait des éléments de noyau (9), dégagé des deux côtés de l'élément de noyau (9) et en partie tiré vers l'extérieur, tandis que le second boudin extérieur (4) en matériau d'étanchéité est creusé et qu'une ouverture en entonnoir (26) est formée, après le remplissage de l'espace creux (5), les zones (10,11) du boudin (3) en matériau d'espacement tirées vers l'extérieur des deux côtés des ouvertures (26) sont à nouveau refoulées vers l'intérieur au moyen d'un bouchon d'entraînement (17) et l'ouverture (26) de ce boudin est obturée et la zone arrachée du second boudin extérieur (4) en matériau d'étanchéité est à nouveau complétée par du matériau d'étanchéité (40) et le bouchon d'entraînement (17) est entièrement recouvert de matériau d'étanchéité (4, 40).

2. Procédé de remplissage d'un espace creux (5) entre deux vitres (1,2) d'un vitrage ignifugé et/ou isolant selon la revendication 1, **caractérisé en ce que**, lors de l'insertion dans le boudin (3) en matériau d'espacement et lors de la compression suivante des vitres (1,2), l'élément de noyau (9) ne déplace qu'une partie de la coupe transversale du boudin (3) en matériau d'espacement.

3. Procédé de remplissage d'un espace creux (5) entre deux vitres (1,2) d'un vitrage ignifugé et/ou isolant selon la revendication 1 ou 2, **caractérisé en ce que**, par retrait de l'élément de noyau (9) dans la zone de l'ouverture formée (26), le matériau d'étanchéité (4) situé à l'extérieur est en partie arraché.

4. Procédé de remplissage d'un espace creux (5) entre deux vitres (1,2) d'un vitrage ignifugé et/ou isolant selon l'une quelconque des revendications 1 à 3, **caractérisé en ce que** le bouchon d'entraînement (17) est revêtu, dans une zone (30) entre les épaulements d'entraînement (18, 19) et le plateau de pression (23), d'un matériau synthétique (31) et, après l'insertion du bouchon d'entraînement (17) dans l'ouverture (26) du boudin (3), ce matériau synthétique (31) est dilaté transversalement à la direction d'insertion (29) et l'ouverture (26) est obturée par coopération avec les zones (10, 11) du boudin (3).

5. Procédé de remplissage d'un espace creux (5) entre deux vitres (1,2) d'un vitrage ignifugé et/ou isolant selon l'une quelconque des revendications 1 à 4, **caractérisé en ce que** l'espace creux (5) entre les vitres (1,2) est désaéré pendant l'enfoncement du bouchon d'entraînement (17) dans les ouvertures (26) du boudin (3) en matériau d'espacement via des ouvertures supplémentaires (20) et ces ouvertures supplémentaires (20) sont obturées par réalisation du second boudin extérieur (4) en matériau d'étanchéité (40).

6. Dispositif de réalisation du procédé selon la revendication 1, pour remplir des espaces creux (5) dans des vitrages ignifugés et/ou isolants, dans lequel au moins deux vitres (1,2) sont aménagées à distance l'une de l'autre et délimitent l'espace creux (5), un boudin périphérique (3) en matériau d'espacement élastique est aménagé entre les vitres (1,2) le long des zones de bord, et un moyen pour remplir de matériau de remplissage l'espace creux entre les vitres est présent, **caractérisé en ce qu'**il contient un premier moyen (9) avec une partie façonnée (12) pour séparer au moins en partie le boudin en matériau d'espacement (3) et avec au moins une partie de tête pour produire une ouverture (26) dans le boudin (3) entre les vitres (1,2), ce premier moyen (9) formant un élément de noyau, un deuxième moyen (17) ayant un dispositif de désaération (20) et des éléments d'étanchéité et d'entraînement(18,19) pour fermer l'ouverture (26) et un troisième moyen (24) pour insérer le deuxième moyen (17) dans l'ouverture (26) du boudin (3).

7. Dispositif pour remplir des espaces creux (5) dans des vitrages ignifugés et/ou isolants selon la revendication 6, **caractérisé en ce que** le premier moyen (9), qui se présente sous la forme d'un élément de noyau, comprend une partie de tête interne et une partie de tête externe (13,14), la pièce façonnée (12) est aménagée entre ces têtes (13,14) sous la forme d'une barrette, la hauteur des parties de tête (13, 14) est au maximum aussi grande que l'espacement entre les vitres (1,2) et la hauteur de la barrette (12) étant plus petite que la hauteur des têtes (13,14).

8. Dispositif pour remplir des espaces creux (5) dans des vitrages ignifugés et/ou isolants selon la revendication 6 ou 7, **caractérisé en ce que** la tête extérieure (14) du premier moyen ou de l'élément de noyau (9) présente un ressaut (15), qui forme un élément de préhension pour retirer l'élément de noyau (9) du boudin (3).

9. Dispositif pour remplir des espaces creux (5) dans des vitrages ignifugés et/ou isolants selon l'une quelconque des revendications 6 à 8, **caractérisé en ce que**, sur la partie de tête interne (13) du premier moyen ou de l'élément de noyau (9), sont agencés des éléments d'entraînement (16) qui sont orientés vers le boudin (3) et ces éléments d'entraînement (16) s'engagent dans le boudin (3) lors du retrait et forment des moyens d'ouverture pour le boudin (3).

10. Dispositif pour remplir des espaces creux (5) dans vitrages ignifugés et/ou isolants selon l'une quelconque des revendications 6 à 9, **caractérisé en ce que** le deuxième moyen (17) présente des épaulements d'entraînement (18, 19) qui s'engagent dans le boudin (3) en matériau d'espacement et un trou traversant (20), un tronçon de tube (22), qui se raccorde à ce trou (20), est aménagé à l'extrémité opposée à l'espace creux (5) entre les vitres (1,2) et un point destiné à la rupture (21) est ménagé sur ce tronçon de tube (22).

11. Dispositif pour remplir des espaces creux (5) dans des vitrages ignifugés et/ou isolants selon l'une quelconque des revendications 6 à 10, **caractérisé en ce que** le troisième moyen (24) peut être relié de manière amovible au deuxième moyen (17) et forme un élément de support pour le deuxième moyen (17), un trou de désaération (25) étant ménagé dans le troisième moyen (24) pour coopérer avec le trou (20) du deuxième moyen (17).

12. Dispositif pour remplir des espaces creux (5) dans des vitrages ignifugés et/ou isolants selon l'une quelconque des revendications 6 à 11, **caractérisé en ce que** le deuxième moyen (17) est revêtu, dans une zone (30) entre les épaulements d'entraînement (18,19) et un plateau de pression (23), d'un matériau synthétique (31) et le plateau de pression (23) peut être déplacé dans la direction des épaulements d'entraînement (18, 19).

13. Dispositif pour remplir des espaces creux (5) dans des vitrages ignifugés et/ou isolants selon l'une quelconque des revendications 6 à 12, **caractérisé en ce que**, entre le boudin (3) en matériau d'espacement et les surfaces de chant (8) des vitres (1,2), une rainure de bord périphérique (7) est ménagée et cette rainure de bord (7à est remplie d'un moyen d'étanchéité (4).

14. Dispositif pour remplir des espaces creux (5) dans des vitrages ignifugés et/ou isolants selon la revendication 11, **caractérisé en ce que** le matériau d'étanchéité (4) est un matériau du groupe des élastomères.

15. Dispositif pour remplir des espaces creux (5) dans des vitrages ignifugés et/ou isolants selon l'une quelconque des revendications 6 à 13, **caractérisé en ce que** le deuxième moyen (17) ferme, après remplissage de l'espace creux (5), les ouvertures (26) du boudin (3) en matériau d'espacement et coopère avec celui-ci et le dispositif de désaération (20) est fermé par du matériau d'étanchéité (40).
